Europäisches Patentamt

European Patent Office

Office européen des brevets

(11) Numéro de publication: **0 196 937**
**A1**

(12) **DEMANDE DE BREVET EUROPEEN**

(21) Numéro de dépôt: 86400420.5

(22) Date de dépôt: 27.02.86

(51) Int. Cl.⁴: **A 01 D 75/02**
**A 01 D 41/14**

(30) Priorité: 01.03.85 FR 8503476

(43) Date de publication de la demande:
08.10.86 Bulletin 86/41

(84) Etats contractants désignés:
BE DE GB IT

(71) Demandeur: Matton, Christian
12 rue du Blocus Merignies
F-59710 Pont à Marcq(FR)

(72) Inventeur: Matton, Christian
12 rue du Blocus Merignies
F-59710 Pont à Marcq(FR)

(74) Mandataire: Ecrepont, Robert
Cabinet Ecrepont 12 Place Simon Vollant (Porte de Paris)
F-59800 Lille(FR)

(54) Perfectionnements apportés aux moissonneuses.

(57) L'invention concerne des perfectionnements apportés à une moissonneuse, notamment une moissonneuse pour récolter des herbages, des céréales ou autres végétaux.

La moissonneuse comprend un dispositif de coupe (2) suivi de moyens (6) pour canaliser les épis vers un convoyeur élévateur (7) en direction des moyens de traitement notamment des moyens de battage.

Elle est caractérisée par le fait qu'elle présente, en outre, en arrière du dispositif de coupe (2) au moins un moyen de ramassage des grains et épis laissés au sol qui couvre une largeur sensiblement égale au dispositif de coupe (2).

Application aux moissonneuses-batteuses.

EP 0 196 937 A1

## PERFECTIONNEMENTS APPORTES AUX MOISSONNEUSES

L'invention concerne des perfectionnements apportés aux moissonneuses pour la récolte d'herbage, de céréales ou d'autres végétaux sur tige.

D'une manière quasi généralisée, actuellement, la récolte des céréales, des herbages, et d'une manière générale des végétaux sur tige, s'effectue au moyen d'une moissonneuse-batteuse, dont les fonctions principales sont de couper les tiges, de séparer les grains des épis, et de stocker au moins de manière momentanée les grains.

Selon les types de machines, après séparation des grains, les tiges sont répandues sur le sol, éventuellement, après avoir été hachées, ou bien elles sont comprimées en bottes.

Les moissonneuses-batteuses les plus couramment utilisées sont automobiles ou adaptées sur un véhicule tel qu'un tracteur, et elles présentent principalement un dispositif de coupe des tiges, tel que par exemple une lame transversale, éventuellement, un moyen de rabattage des tiges,et une table de coupe en arrière du dispositif de coupe.

Ensuite, viennent des moyens tels que par exemple un tambour avec à sa périphérie une ou deux vis hélicoïdales, qui rassemblent les tiges coupées et les canalisent dans une goulotte, où elles sont prises en charge par un convoyeur en direction des moyens de battage.

Ces machines donnent de bons résultats, mais laissent cependant au sol une certaine quantité d'épis qui n'ont pu être récoltés, notamment ceux qui ont été cassés par une tempête, ceux qui sont trop murs et dont les grains sont tombés d'eux-même, les épis qui ont été couchés ou écrasés.

Dans certains cas, on peut estimer la quantité des épis non récoltés à cent kilos par hectare.

Ces épis qui restent au sol parmi les éteules, posent un problème.

En effet, il est parfois nécessaire d'enfouir après récolte les éteules et, simultanément, les épis et les grains restés au sol, de manière à les faire germer.

Ceci nécessite donc de repasser sur le champ avec un outil d'où une perte de temps importante.

De plus, lorsqu'il y a un changement de culture pour la récolte suivante, par exemple, une culture d'escourgeon après une récolte de blé, il y a lieu de réaliser des traitements sélectifs, de façon à isoler l'une de l'autre les deux cultures.

Enfin, l'inconvénient majeur est qu'il peut y avoir transmission de maladie d'une récolte à l'autre, par l'intermédiaire des grains et des épis qui restent au sol.

Un des buts de la présente invention est de remédier à ces inconvénients, et de proposer une moissonneuse qui ne laisse au sol qu'une quantité tout à fait limitée de grains et d'épis après son passage.

Un autre but de la présente invention est de proposer une moissonneuse qui permet d'améliorer encore le rendement de la récolte, de réaliser une bonne isolation entre deux cultures successives, et donc de minimiser le risque de transmission de maladie d'une récolte à l'autre.

Un autre but de la présente invention est de proposer une moissonneuse qui permet d'éviter d'avoir à enfouir les éteules et à effectuer des traitements sélectifs lors de la récolte suivante.

La moissonneuse selon l'invention est caractérisée en ce qu'elle présente en arrière du dispositif de coupe, au moins un moyen de ramassage de graines et épis laissés au sol qui couvre une largeur sensiblement égale au dispositif de coupe.

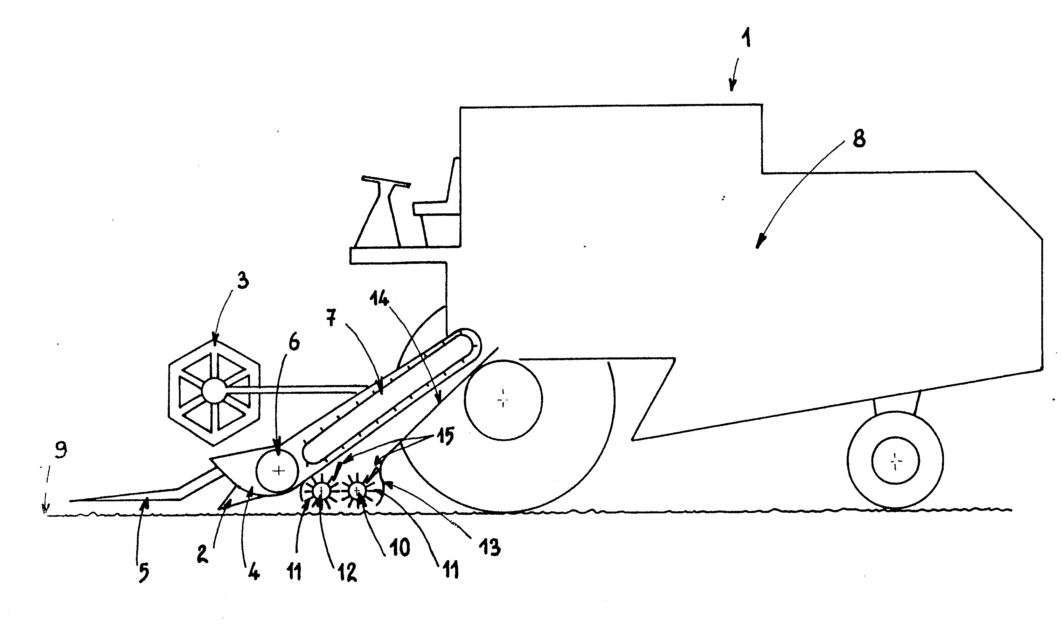

L'invention sera mieux comprise à l'aide de la description qui va suivre, faite à titre d'exemple non limitatif, en regard du dessin en annexe qui représente schématiquement une vue de côté d'une moissonneuse-batteuse illustrant les perfectionnements de la présente invention.

La moissonneuse-batteuse 1 représentée à titre d'illustration de l'invention dans la figure unique est du type automobile.

Ceci naturellement n'est qu'un exemple et, d'une manière générale, l'invention concerne tout type de moissonneuse-batteuse automobile ou destinée à être adaptée sur un véhicule existant par exemple, un tracteur.

La moissonneuse-batteuse 1 de la figure est destinée à récolter des céréales, des plantes fourragères, et d'autres types de végétaux sur tige.

Le travail de la moissonneuse-batteuse consiste à couper les plantes à la base de leur tige, au voisinage du sol, puis à diriger les épis ainsi coupés vers des moyens de traitement, par exemple de battage, qui séparent les grains du reste des épis puis rejettent la paille en arrière.

La moissonneuse-batteuse 1 représentée dans la figure comprend d'une manière connue un dispositif de coupe transversal tel qu'une lame oscillante, dont la largeur peut atteindre quatre mètres et plus.

En avant du dispositif de coupe, éventuellement, un rabatteur 3 couche les épis vers la table de coupe 4 de la moissonneuse-batteuse et un ou plusieurs diviseurs latéraux 5 divisent la récolte coupée de celle restant debout pour le passage suivant.

En aval du dispositif de coupe 2, des moyens qui sont le plus souvent constitués par un tambour à vis hélicoïdal 6 ramènent les épis coupés sur toute la largeur du dispositif de coupe 2 dans une zone plus étroite, où ils sont pris en charge par un convoyeur schématisé en 7 qui les amène vers les moyens de battage non représentés, qui sont situés dans le corps 8 de la moissonneuse-batteuse 1.

La moissonneuse-batteuse 1 comprend par ailleurs tout moyen de réglage approprié de la position des dispositifs de coupe 2 par rapport à la surface du sol 9, ainsi que de la hauteur du rabatteur.

Selon l'invention, la moissonneuse-batteuse comprend en arrière du dispositif de coupe 2 au moins un moyen de ramassage des grains et épis laissés au sol qui couvre une largeur sensiblement égale au dispositif de coupe (2).

Selon un mode préférentiel de réalisation, le moyen de ramassage est constitué par au moins un rouleau transversal 10 qui couvre une largeur sensiblement égale à la largeur du dispositif de coupe 2.

Le rouleau transversal 10 présente sur sa périphérie une pluralité de dents orientées approximativement de manière radiale qui, de préférence, sont flexibles, et qui viennent sensiblement effleurer la surface du sol dans la partie inférieure du rouleau.

Le rouleau 10 est animé d'un mouvement de rotation dans un sens inverse des roues de la moissonneuse-batteuse 1, c'est à dire que les dents 11 situées dans la partie inférieure du rouleau 10 ont tendance à se déplacer vers l'avant de la moissonneuse-batteuse 1.

Ce mouvement de rotation fait que le rouleau 10 balaye la surface du sol entre les éteules en remontant et récupère les épis et les grains laissés au sol.

De préférence, la moissonneuse-batteuse présente deux rouleaux jumelés 10 et 12 disposés sensiblement parallèlement entre eux.

Les deux rouleaux 10 et 12 peuvent avoir une fonction parallèle, c'est à dire être entraînés dans le même sens de rotation et être suffisamment distants l'un de l'autre pour qu'il n'y ait aucun contact entre leurs dents respectives.

Dans ce cas, il est également possible de disposer plus de deux rouleaux en parallèle.

Cependant, de préférence, les rouleaux 10 et 12 sont disposés parallèlement entre eux à une distance qui fait que les enveloppes définies par les extrémités de leurs dents respectives sont approximativement tangentes.

De plus, leur sens de rotation est inverse et le rouleau 12 situé en avant du rouleau 10 balaye le sol en avalant, alors que le rouleau arrière 10 le balaye en remontant.

0196937

Les rouleaux 10 et 12 sont supportés par tout moyen approprié, de préférence, réglables en hauteur de façon à permettre de régler la position des dents par rapport au sol dans là partie inférieure des rouleaux.

En outre, ils sont entraînés en rotation par tout moyen approprié, par exemple, une transmission mécanique les reliant au moteur principal, ou bien par un moteur électrique alimenté directement par la batterie ou par un alternateur.

La hauteur des deux rouleaux 10, 12 est déterminée de façon que, dans leur partie inférieure, les dents viennent sensiblement effleurer la surface du sol.

De cette façon, les épis, les grains, qui restent au sol après le passage du dispositif de coupe 2, sont en quelque sorte balayés par les deux rouleaux 10, 12 et récupérés à ce niveau notamment avant le passage des roues, et avant le rejet éventuel de la paille en arrière de la moissonneuse.

Les dents 11 qui sont de préférence flexibles, présentent une hauteur voisine de la hauteur des éteules laissées au sol par le dispositif de coupe, de façon que la partie centrale des rouleaux soit située au dessus des éteules et que les dents pénètrent entre les éteules en emmenant avec elles les épis et les grains laissés au sol.

Les épis et les grains qui sont balayés par les rouleaux 10 et 12 sont de préférence recyclés dans la moissonneuse-batteuse vers des moyens de battage.

Pour ce faire, par exemple, les rouleaux 10, 12 sont entourés d'un carter 13 surmonté d'une hotte 14 qui canalise le flux des grains et des épis ramassés au sol.

La hotte 14 peut déboucher en plusieurs endroits possibles, tout d'abord, elle peut déboucher sous la partie supérieure du convoyeur 7, au niveau du bac à pierres qui se trouve généralement dans cette zone.

Elle peut également déboucher latéralement dans la partie centrale du convoyeur 7, par un côté ou bien par les deux côtés.

Egalement, l'extrémité supérieure de la hotte 14 peut déboucher dans la partie centrale du convoyeur sur sa partie de retour.

0196937

Eventuellement, dans la partie supérieure des rouleaux 10, 12, un peigne 15 ou tout autre moyen approprié dégage les épis et les grains qui sont emprisonnés entre les dents 11 des rouleaux 10, 12.

Le mouvement ascendant des épis et des grains à l'intérieur du carter 13 et de la hotte 14 est assuré par tout moyen approprié. En particulier, ce mouvement est facilité par le brassage de l'air réalisé par les dents des deux rouleaux 10, 12 compte tenu du mouvement de rotation inverse des deux rouleaux.

Le mouvement ascendant peut être également favorisé par des moyens aspirants ou soufflants, tels qu'une soufflerie, ou par des moyens de convoyage mécanique, par exemple un transporteur sans fin par vis ou par bande.

Il faut souligner que les rouleaux 10 et 12 opèrent sur une largeur sensiblement égale à celle du dispositif de coupe 2 et que, de même que pour ce dispositif de coupe, il est nécessaire de rassembler l'ensemble des grains et des épis sur une largeur inférieure avant de les amener vers les moyens de battage.

Ceci peut être obtenu par une forme judicieuse du carter 13 et de la hotte 14, ou par un moyen mécanique tel qu'un tambour semblable au tambour 6.

Pour favoriser cet effet, éventuellement, les dents peuvent être disposées selon des hélices à la surface extérieure des rouleaux 10, 12 ou bien les rouleaux peuvent être inclinés dans un plan horizontal.

En outre, lorsque la hotte 14 est placée sensiblement dans l'axe de la machine, éventuellement, chaque rouleau 10, 12 peut comporter deux éléments de rouleau disposés en "V" dont l'ouverture est orientée vers l'avant de la machine, et la pointe vers l'arrière, c'est à dire vers l'entrée de la hotte 14.

Sur le parcours de retour dans les moyens de battage des graines et épis ramassés au sol, la moissonneuse comprend en outre un système de triage éliminant la terre.

Naturellement, la présente description n'est donnée qu'à titre indicatif et l'on pourrait adopter d'autres mises en oeuvre de l'invention sans pour autant sortir du cadre de celle-ci.

0196937

En particulier, les perfectionnements de l'invention pourraient être adaptés à d'autres machines agricoles que les moissonneuses-batteuses, c'est à dire d'une manière générale à toute machine de récolte qui coupe les végétaux puis les récupère pour un traitement ultérieur, plutôt que de les faucher et de les laisser au sol.

Ainsi, l'invention peut s'appliquer à la récolte des végétaux tels que les petits pois, les haricots ...

Le terme "moissonneuse" doit être pris dans un sens large et désigne d'une manière globale une machine de récolte.

0196937

## REVENDICATIONS

1. Moissonneuse (1) pour récolter des herbages, des céréales, des végétaux sur tige, comprenant :

- un dispositif de coupe (2) tel qu'une lame de coupe transversale,

- au moins un moyen de ramassage des grains et épis laissés au sol, lequel moyen de ramassage couvre une largeur sensiblement égale à celle du dispositif de coupe (2) et, éventuellement,

- un dispositif de rabattement (3),

- des moyens pour canaliser les tiges et épis récoltés par le dispositif de coupe vers un convoyeur élévateur (7) les conduisant à des moyens de traitement, et notamment de moyens de battage,

cette moissonneuse étant **CARACTERISEE** par le fait que le moyen de ramassage des grains et épis laissés au sol comprend, en combinaison :

- au moins un rouleau (10) transversal, couvrant une largeur sensiblement égale à la largeur du dispositif de coupe (2) et présentant à sa périphérie une pluralité de dents (11) qui viennent sensiblement effleurer la surface du sol dans la partie inférieure du rouleau, ce rouleau étant animé d'un mouvement de rotation dans un sens tel que, dans la partie inférieure du rouleau, ses dents se déplacent vers l'avant de la moissonneuse (1) et,

- en sortie de ce rouleau, des moyens de convoyage conçus et disposés de manière à ramener, vers des moyens de battage, les épis et grains ramassés par le rouleau transversal.

2. Moissonneuse selon la revendication 1 caractérisée par le fait qu'en arrière du dispositif de coupe (2) mais devant au moins l'un des rouleaux (10) ci-dessus, elle comprend un second rouleau (12) parallèle au précédent, tournant dans le même sens que lui mais écarté de celui-ci d'une distance suffisante pour que leurs dents respectives n'entrent pas en contact les unes avec les autres.

3. Moissonneuse selon la revendication 1 caractérisée par le fait qu'en arrière du dispositif de coupe (2) mais devant au moins l'un des rouleaux (10) ci-dessus, elle comprend un second rouleau (12) parallèle au précédent, tournant en sens contraire

0196937

du dit précédent rouleau et donc tournant de manière à travailler en avalant tandis que le précédent rouleau travaille en remontant.

4. Moissonneuse selon l'une quelconque des revendications 1 à 3 caractérisée par le fait que les moyens de convoyage consistent en au moins un transporteur à vis.

5. Moissonneuse selon l'une quelconque des revendications 1 à 3, caractérisée par le fait que chaque rouleau (10, 12) présente des dents flexibles, orientées sensiblement radialement, dont la longueur est voisine de la longueur moyenne des éteules laissées par le dispositif de coupe (2).

6. Moissonneuse selon l'une quelconque des revendications 1 à 5 caractérisée par le fait qu'elle comprend en outre autour des rouleaux (10, 12) un carter (13), surmonté d'une hotte (14), qui canalise les épis et les grains ramassés par les rouleaux (10, 12).

7. Moissonneuse selon la revendication 6 caractérisée par le fait que la hotte (14) débouche dans sa partie supérieure au niveau de l'extrémité supérieure du convoyeur élévateur (7).

8. Moissonneuse selon la revendication 6 caractérisée par le fait que l'extrémité supérieure de la hotte (14) débouche latéralement dans la zone centrale du convoyeur élévateur (7).

9. Moissonneuse selon l'une quelconque des revendications 6 à 8 caractérisée par le fait qu'il comprend en outre des moyens aspirants favorisant le mouvement ascendant des épis et des grains à l'intérieur de la hotte (14).

10. Moissonneuse selon l'une quelconque des revendications 6 à 8 caractérisée par le fait qu'il comprend en outre des moyens soufflants favorisant le mouvement ascendant des épis et des grains à l'intérieur de la hotte (14).

0196937

D196937

# RAPPORT DE RECHERCHE EUROPEENNE

Numéro de la demande

EP 86 40 0420

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| A | US-A-3 961 465 (WININGS) * Colonne 2, ligne 16 - colonne 3, ligne 35 * | 1,9 | A 01 D 75/02 A 01 D 41/14 |
| A | US-A-3 468 112 (LANDGREBE) * En entier * | 1,2,4, 6,7,10 | |
| A | US-A-3 020 696 (THUROW) | | |
| A | DE-A-2 808 243 (CLAAS) | | |
| A | US-A-3 742 687 (KALKIWAF) | | |
| A | US-A-3 212 247 (ERICKSON) | | |

DOMAINES TECHNIQUES RECHERCHES (Int. Cl.4)

A 01 D

Le present rapport de recherche a été établi pour toutes les revendications

| Lieu de la recherche | Date d'achèvement de la recherche | Examinateur |
|---|---|---|
| LA HAYE | 10-06-1986 | DE LAMEILLIEURE D. |